# EUROPÄISCHE PATENTANMELDUNG

(11) **EP 2 574 242 A2**
(43) Veröffentlichungstag der Anmeldung: **03.04.2013**
(21) Anmeldenummer: 12179527.2
(22) Anmeldetag: 07.08.2012
(51) Int. Cl.: A23L 1/312, A23L 1/317

(54) **Verfahren zur Herstellung eines Lebensmittels aus Knochen und anhaftenden Fleischresten und Produkt**

(30) Priorität: 01.10.2011 DE 102011114784
(71) Anmelder: CDS Hackner GmbH, 74564 Crailsheim (DE)
(72) Erfinder: Hackner, Michael, 74592 Kirchberg an der Jagst (DE)
(74) Vertreter: Vonnemann, Gerhard

(57) **Zusammenfassung**

Die Erfindung betrifft ein Verfahren zur Herstellung eines Lebensmittels aus Knochen mit ggf. anhaftenden Fleischresten, insbesondere zur Verwertung von Knochen mit Restfleisch, sowie ein nach diesem Verfahren hergestelltes Lebensmittel. Das Verfahren sieht vor, dass die Knochen, mittels einer Presse zu Pressgut komprimiert werden. Dabei wird das Ausgangsvolumen der Knochen um Eindrittel bis Zweidrittel im gepressten Zustand verringert. Anschließend wird das Pressgut zu Gefriergut schockgefrostet und zu Würfeln, mit einer Kantenlänge zwischen 2 und 5 cm, zerkleinert. Das so erhaltene Lebensmittel kann zur Bereitung von Soßen oder Suppen verwendet werden.

## Beschreibung

Die Erfindung betrifft ein Verfahren zur Herstellung eines Lebensmittels aus Knochen mit ggf. anhaftenden Fleischresten, insbesondere zur Verwertung von Knochen mit Restfleisch.

Außerdem betrifft die Erfindung ein Lebensmittel, vorzugsweise zur Bereitung von Soßen oder Suppen.

Bei der Zerlegung von Tierhälften, z.B. von Schweinen und Rindern, fallen Knochen an, an denen noch 30-40% Fleischreste verbleiben. Diese Knochen werden weltweit als Suppen oder Soßenknochen gehandelt und sind sehr voluminös.

Eine Alternative sind sogenannte Separatoren, die die Knochen stark zusammenpressen. Aus der DE 43 28 627 C2 ist ein Separator zum Gewinnen des Restfleisches von den Knochen von Karbonadensträngen geschlachteter Schweine bekannt.

Bei einem aus DE 42 02 603 A1 bekannten Hochproduktiv-Verfahren zur Gewinnung eines Fleischproduktes aus fleischbehafteten Knochen werden zum Erhalt der natürlichen Faserstruktur zwei Verfahrensschritte kombiniert, wobei der erste das Abpressen des Fleisches von den Knochen durch Pressen in einer Form umfaßt, die mit einer Kavität versehen ist, die der Knochenkontur nachgeformt ist und in die das zu bearbeitende Teil eingelegt wird, und der zweite Verfahrensschritt eine Bearbeitung der so erhaltenen Fleischteile zwecks Ausfilterung von Sehnen, Häuten, Knorpeln, etc. in einem Weichseparator des Preßband-Hohltrommel-Typs betrifft.

Dabei löst sich das Restfleisch vom Knochen ab und wird als Hackfleisch eingefroren. Dieses Hackfleisch ist ein ideales Verarbeitungsfleisch für Wurstprodukte. Im Zuge der BSE Krise wird es in Deutschland fast gar nicht mehr eingesetzt. Separatorenfleisch wird vor allem exportiert. Die Haltbarkeit und Lagerfähigkeit von Separatorenfleich ist stark begrenzt, da es sich wie Hackfleisch verhält.

Aus der DE 34 22 111 A1 ist alternativ ein Verfahren für die Verarbeitung von Biomasse, z.B. Knochenmasse, bekannt, bei dem die rohe Biomasse mit proteolytischem Enzym hydrolysiert wird. Die ungelösten harten Teilchen werden vom gesamten Hydrolysat durch grobes Filtrieren abtrennt und das filtrierte Enzymhydrolysat wird einer Membrantrennung über semipermeable Membranen unterworfen. Bei solchen Produkten geht die ursprüngliche Struktur der Knochenmasse verloren.

Es besteht somit ein dringendes Bedürfnis nach einem Produkt, das die hohen Qualitätsanforderungen an heutige Lebensmittel erfüllt und kostengünstig bei der Herstellung von Suppen und Sossen eingesetzt werden kann.

[A1] Diese Aufgabe wird durch ein Verfahren zur Herstellung eines Lebensmittels aus Knochen mit ggf. anhaftenden Fleischresten, insbesondere zur Verwertung von Knochen mit Restfleisch, dadurch gelöst, dass die Knochen, insbesondere in Form von Strängen, mittels einer Presse zu Pressgut, insbesondere in einer Schutzgasatmosphäre, komprimiert werden, vorzugsweise in eine prismatische Form. Mit dem Pressen kann den Knochen eine gewünschte vorteilhafte Form zur Weiterverarbeitung gegeben werden. Das Pressen kann in oben offenen Lagerbehältern geschehen, in die ein Stempel einfährt, der die im Behälter gelagerten Knochen komprimiert. Die Knochen federn nach dem Pressen nicht zurück sondern verbleiben in der angenommenen Form. Überraschender Weise löst sich das Fleisch bei dem erfindungsgemäßen Druck nicht ab. Der Inhalt eines üblichen Lagerbehälters mit den Abmessungen 60 cm Länge, 40 cm Breite und 20 cm Höhe kann sollte idealer Weise mit einer 24t Presse auf einen Quader mit ca. der Hälfte des Ausgangsvolumens komprimiert werden. Ein so entstandenes Pressgut weist weitestgehend die ursprüngliche Konsistenz auf und damit auch die Qualität des Ausgangsmaterials auf.

[A2] In Ausgestaltung des Verfahrens ist vorgesehen, dass ein Ausgangsvolumen der Knochen um Eindrittel bis Zweidrittel im gepressten Zustand verringert wird, vorzugsweise etwa halbiert wird. Der Lufteinschluß im Pressgut wird vorteilhaft verringert. Aeroben Mikroorganismen wird damit die Grundlage entzogen und die Haltbarkeit erhöht.

[A3] Wenn die Knochen mit einem Pressdruck zwischen 50 und 150 N/cm², vorzugsweise zwischen 90 und 110 N/cm², insbesondere mit ca 100 N/cm² verdichtet werden, erhält man erfahrungsgemäß eine qualitativ besonders vorteilhafte Struktur des Pressgutes.

[A4] Zur weiteren Erhöhung der Haltbarkeit wird das Pressgut anschließend zu Gefriergut schockgefrostet. Die Schockfrostung ist sehr gut zur schonenden Konservierung des Pressgutes geeignet. Sie schützt das Pressgut gegen Austrocknung sichert den weiteren Qualitätserhalt des Pressgutes. Die Zellflüssigkeit bildet bei diesem schnellen Verfahren nur sehr kleine Eiskristalle. Die Zellwände und Membranen von Organellen werden dadurch nicht zerstört. Beim Auftauen bleibt die Zellstruktur daher weitgehend erhalten. Die Zellen laufen nicht aus und bestimmte Inhaltsstoffe bleiben in den Organellen von der restlichen Zellflüssigkeit getrennt. Das Zellwasser und die Nährstoffe bleiben eingeschlossen und der Innendruck der Zelle bleibt erhalten. Daher verliert das Pressgut nicht seine Konsistenz.

[A5] Das durch Schockfrosten entstandene Gefriergut wird mit Vorteil anschließend zerkleinert, vorzugsweise zu Prismen, insbesondere zu Quadern, vorzugsweise Würfeln, mit einer Kantenlänge zwischen 1 und 10 cm, bevorzugt zwischen 2 und 5 cm. In diesen Abmessungen kann der einzelne Würfel von Betrieben oder im Haushalt nach Bedarf weiter verarbeitet werden. Das Gefriergut ist dann so portioniert, wie der jeweilige Markt es erfordert. Verluste durch Auftauen größerer Mengen als für den Einzelfall benötigt werden vermieden.

[A6] In automatisierter und kontinuierlicher Arbeitsweise kann das Pressen zur Verarbeitung großer Knochenmengen auch durch einen Extruder und das Schockfrosten mittels einer gekühlten Form erfolgen. Bei einem solchen Kontaktgefrierverfahren wird der Pressgutstrang durch eine Form geführt, die von einem Kältemittel durchflossen ist, das diese auf bis zu -40 °C abkühlt. Dadurch wird dem Pressgut sehr schnell Wärme entzogen.

[A7] Das Gefriergut hat eine mechanische Festigkeit, die es erlaubt das Pressgut auf verschiedene Weisen je nach Bedarfsfall zu Portionen zu zerkleinern. Das Zerkleinern kann mechanisch durch Sägen oder hydraulisch durch Wasserstrahlschneiden oder thermisch durch Laserschneiden erfolgen.

[A8] Die erfindungsgemäße Aufgabe wird auch durch ein nach dem Verfahren hergestelltes Lebensmittel gelöst, vorzugsweise zur Bereitung von Soßen oder Suppen, das als schockgefrostetes Pressgut aus Knochen, ggf. mit anhaftenden Restfleich, in Quaderform, vorzugsweise würfelförmig, mit einer Kantenlänge zwischen 1 und 10 cm, insbesondere zwischen 2 und 5 cm geformt ist. Ein solches Lebensmittel ist lange haltbar. Es weist die Qualität des Ausgangsproduktes auf. Aufgrund seiner bedarfsgerechten Portionierung weist es beim Verbrauch geringe Verluste auf. Schließlich beansprucht es wenig Lagerplatz, da es ohne Zwischenraum stapelbar ist.

[A9] Beim erfindungsgemäßenn Lebensmittel weist eine Dichte zwischen 1,1 und 1,4 g/cm³ bevorzugt ca 1,3, auf.

[A10] Wenn das Lebensmittel als prismatischer Strang geformt ist, vorzugsweise mit vorgeformten Sollbruchstellen, können bedarfsabhängig unterschiedliche Längen vom Strang abgenommen werden. Die Sollbruchstellen erleichtern ein bedarfsgerechtes Abbrechen.

Das erfindungsgemäße Verfahren kann beispielsweise wie folgt ablaufen:
Die in stapelbaren Lagerbehältern enthaltenen Knochenstränge mit Restfleisch werden einzeln einer Presse zugeführt. Diese Presse, die mit einem Stempel ausgerüstet ist, der die Größe der oberen Öffnung des Lagerbehälters entspricht, fährt den Stempel in den Lagerbehälter ein und verdichtet die Knochenstränge auf etwa die Hälfte ihres Ausgangsvolumens. Durch das Pressen erhält man 50% des ursprünglichen Volumens und aus unförmigen Knochen entsteht ein gleichförmiger Block, der automatisiert weiterverarbeitet werden kann. Die nach dem Pressen entstandenen gleichförmigen Blöcke werden anschließend schockgefrostet. Dabei bleibt die Form erhalten. Diese gleichförmigen Blöcke werden einer automatischen Säge oder Schneidevorrichtung zugeführt. Die Endprodukte sind Würfel in verschiedenen Größen, je nach Schneidevorrichtung z.B. 5x5 cm und 2,5x2,5 cm.

Dies Zerkleinern kann durch Sägen, stanzen oder Wasserstrahlschneiden geschehen. Das Endprodukt ist stapelbar und den Platz optimierend verpackbar. Es hat ein minimales Lager- und Transportvolumen. Die gefrorenen Würfel können einzeln aus dem Karton entnommen werden, da sie nicht wie sonst üblich, aneinandergefroren sind. Des Weiteren haben die Knochen einen positiven Einfluss auf das Gelierverhalten der Soßen/Suppen, da durch das Pressen die Eiweißstruktur des Fleisches aufgeschlossen wird.

## Patentansprüche

1. Verfahren zur Herstellung eines Lebensmittels aus Knochen mit ggf. anhaftenden Fleischresten, insbesondere zur Verwertung von Knochen mit Restfleisch, **dadurch gekennzeichnet, dass** die Knochen, insbesondere in Form von Strängen, mittels einer Presse zu Pressgut komprimiert werden, vorzugsweise in eine prismatische Form.

2. Verfahren nach Anspruch 1, **dadurch gekennzeichnet, dass** ein Ausgangsvolumen der Knochen um Eindrittel bis Zweidrittel im gepressten Zustand verringert wird, vorzugsweise etwa halbiert wird.

3. Verfahren nach Anspruch 1 oder 2, **dadurch gekennzeichnet, dass** die Knochen mit einem Pressdruck zwischen 50 und 150 N/cm², vorzugsweise zwischen 90 und 110 N/cm², insbesondere mit 100 N/cm², verdichtet werden.

4. Verfahren nach Anspruch 1, 2 oder 3, **dadurch gekennzeichnet, dass** das Pressgut anschließend zu Gefriergut schockgefrostet wird.

5. Verfahren nach Anspruch 4, **dadurch gekennzeichnet, dass** das Gefriergut zerkleinert wird, vorzugsweise zu Prismen, insbesondere zu Quadern, vorzugsweise zu Würfeln, mit einer Kantenlänge zwischen 1 und 10 cm, bevorzugt zwischen 2 und 5 cm.

6. Verfahren nach einem oder mehreren der vorhergehenden Ansprüche, **dadurch gekennzeichnet, dass** das Pressen durch einen Extruder und das Schockfrosten mittels einer gekühlten Form erfolgt.

7. Verfahren nach einem oder mehreren der vorhergehenden Ansprüche, **dadurch gekennzeichnet, dass** das Zerkleinern mechanisch durch Sägen oder hydraulisch durch Wasserstrahlschneiden oder thermisch durch Laserschneiden erfolgt.

8. Lebensmittel, vorzugsweise zur Bereitung von Soßen oder Suppen, **dadurch gekennzeichnet, dass** es als schockgefrostetes Pressgut aus Knochen, ggf. mit anhaftenden Restfleich, in Quaderform, vorzugsweise würfelförmig, mit einer Kantenlänge zwischen 1 und 10 cm, insbesondere zwischen 2 und 5 cm geformt ist.

9. Lebensmittel nach Anspruch 8, **dadurch gekennzeichnet, dass** es eine Dichte zwischen 1,1 und 1,4 g/cm³, bevorzugt ca. 1,3 g/cm³ aufweist.

10. Lebensmittel nach Anspruch 8 oder 9, **dadurch gekennzeichnet, dass** es als prismatischer Strang, vorzugsweise mit vorgeformten Sollbruchstellen ausgebildet ist.
